# EUROPÄISCHE PATENTSCHRIFT

(11) **EP 2 857 136 B1**
(45) Veröffentlichungstag und Bekanntmachung des Hinweises auf die Patenterteilung: **09.11.2016**
(21) Anmeldenummer: 14184261.7
(22) Anmeldetag: 10.09.2014
(51) Int. Cl.: B23K 9/167, B23K 9/28, B23K 9/29

(54) **Elektrodenhalter für einen Schweißbrenner sowie entsprechender Schweißbrenner**
Electrode holder for a welding torch and corresponding welding torch
Support d'électrodes pour une torche de soudage et torche de soudage correspondante

(30) Priorität: 10.09.2013 DE 102013014817
(43) Veröffentlichungstag der Anmeldung: 08.04.2015
(73) Patentinhaber: TBi Industries GmbH, 35463 Fernwald (DE)
(72) Erfinder: Reuter, Wolfgang, Dr., 61231 Bad Nauheim (DE); Dvorjatkin, Artem, 35510 Butzbach (DE)
(74) Vertreter: advotec.

(56) Entgegenhaltungen:
- EP-A2- 2 295 185
- DE-C1- 19 537 988
- US-A- 2 527 235
- US-A- 5 473 132

## Beschreibung

Die vorliegende Erfindung betrifft einen Elektrodenhalter für einen Schweißbrenner mit nicht abschmelzender Elektrode mit einem mit einer Längsbohrung zur Aufnahme eines Längsabschnitts einer Elektrode versehenen Aufnahmekörper, wobei der Aufnahmekörper in einem Klemmbereich mit einem Längsschlitz zur Ausbildung von Klemmsegmenten versehen ist und in einem an den Klemmbereich anschließenden Befestigungsbereich eine Verbindungseinrichtung zur Verbindung mit einer an einem Brennerkopf angeordneten Spanneinrichtung aufweist, wobei der Klemmbereich einen Außenkonus aufweist, der bei Anordnung des Elektrodenhalters in einer im Brennerkopf aufgenommenen Elektrodenhalteraufnahme derart mit einem Innenkonus der Elektrodenhalteraufnahme zusammenwirkt, dass bei Herstellung einer Verbindung zwischen der Verbindungseinrichtung des Elektrodenhalters und der Spanneinrichtung durch axiale Verspannung des Innenkonus mit dem Außenkonus im Klemmbereich des Aufnahmekörpers eine radiale Klemmkraft auf die Elektrode wirkt, wobei sich der im Aufnahmekörper ausgebildete Längsschlitz über den Außenkonus hinaus bis zu einem Frontende des Aufnahmekörpers erstreckt. Darüber hinaus betrifft die Erfindung einen Schweißbrenner mit einem derartigen Elektrodenhalter.

Aus der DE 195 37 988 C1, Basis für den Oberbegriff des Anspruchs 1 ist ein Schweißbrenner mit nicht abschmelzender Elektrode bekannt, der in einer Elektrodenhalteraufnahme einen Elektrodenhalter der eingangs genannten Art aufweist, der zur klemmenden Aufnahme einer auswechselbar aufgenommenen Elektrode dient. Zur fixierten Aufnahme und Übertragung des Schweißstroms in die Elektrode ist der Elektrodenhalter zumindest teilweise als Klemmhülse auszubilden, wobei die Klemmhülse zur Ausbildung von Klemmsegmenten einen Längsschlitz aufweist, der sich bis zu einem axialen Endquerschnitt der Klemmhülse hin erstreckt, an dem ein Außenkonus ausgebildet ist. Aufgrund dieser bis in den axialen Endquerschnitt der Klemmhülse auslaufenden Ausgestaltung des Längsschlitzes weisen die Klemmsegmente bei einer Verspannung des Außenkonus mit dem Innenkonus der Elektrodenhalteraufnahme ein Biegeverhalten wie ein einseitig eingespannter Biegeträger auf; also eine maximale Auslenkung an den axialen Enden mit einer entsprechend hohen Flächenpressung an den axialen Enden und Kontaktbereichen zwischen den Klemmsegmenten und der Oberfläche der Elektrode, die auf den Bereich der axialen Enden begrenzt sind.

Darüber hinaus weist der bekannte Elektrodenhalter aufgrund des sich bis zum axialen Ende des Aufnahmekörpers erstreckenden Längsschlitzes an seinem axialen Ende einen Stirnspalt auf, in den bei einem Schweißvorgang Schweißspritzer eindringen könnten, welche die Relativbeweglichkeit der Klemmsegmente des Klemmbereichs beeinträchtigen, wenn dem Frontende kein Gaslinsengehäuse axial vorgeordnet wäre, das mit einem Hülsenabschnitt das Frontende abschirmt.

Der vorliegenden Erfindung liegt daher die Aufgabe zugrunde, einen Elektrodenhalter für einen Schweißbrenner vorzuschlagen, der so ausgestaltet ist, dass zum einen eine Vergrößerung der zwischen dem Klemmbereich der Elektrodenaufnahme und der Elektrode ausgebildeten Kontaktflächen ermöglicht wird, und zum anderen die Ausbildung eines Stirnspaltes vermieden wird.

Diese Aufgabe wird durch einen Elektrodenhalter mit den Merkmalen des Anspruchs 1 gelöst.

Erfindungsgemäß erstreckt sich der im Aufnahmekörper ausgebildete Längsschlitz über den Außenkonus hinaus bis zu einem Frontende des Aufnahmekörpers, wobei das Frontende eine vordere axiale Begrenzung des Längsschlitzes im Aufnahmekörper ausbildet, derart, dass ein axiales Ende des Längsschlitzes von einem axialen Ende des Aufnahmekörpers durch das Frontende beabstandet ist.

Die Klemmsegmente des erfindungsgemäßen Elektrodenhalters weisen aufgrund des in der Länge durch das Frontende begrenzten Ausgestaltung des Längsschlitzes ein Biegeverhalten auf, das dem Biegeverhalten eines an beiden Enden eingespannten Biegebalken ähnelt, so dass die Biegelinie der Klemmsegmente im Bereich des Außenkonus eine vergleichsweise geringe Steigung aufweist mit einer daraus resultierenden geringeren Flächenpressung und vergleichsweise größerer zwischen den Klemmsegmenten und der Elektrode ausgebildeten Kontaktbereichen. Darüber hinaus ist bei dem erfindungsgemäßen Elektrodenhalter das axiale Ende des Längsschlitzes vom axialen Ende des Aufnahmekörpers durch das Frontende beabstandet. Damit wird durch den Längsschlitz im axialen Ende des Elektrodenhalters kein Spalt ausgebildet, in den Schweißspritzer eindringen könnten.

Bei einer besonders bevorzugten Ausführungsform des Elektrodenhalters weist das Frontende des Aufnahmekörpers eine die Längsbohrung einrahmende Frontfläche auf, deren Außendurchmesser größer ist als ein Außendurchmesser des Klemmbereichs, so dass sich ein abschirmender Effekt auch für den an das Frontende anschließenden Längsschlitz einstellt.

Wenn das Frontende kegelförmig ausgebildet ist mit einem sich von einem Öffnungsrand der Längsbohrung zum Klemmbereich hin vergrößernden Außendurchmesser, kann das Frontende zusätzlich zur Ausgestaltung eines profilierten Strömungskanals zwischen der Oberfläche des Frontendes und einer das Frontende umgebenden Schutzgasdüse des Schweißbrenners dienen.

Besonders vorteilhaft zur Verhinderung von Ablagerungen oder Aufschweißungen auf dem Frontende erweist es sich, wenn eine Frontfläche des Frontendes ein vom Klemmbereich des Elektrodenhalters abweichendes Material aufweist, das hinsichtlich seiner Anlagerungen verhindernden Wirkung optimierbar ist.

Vorzugsweise ist das abweichende Material durch eine auf das Frontende aufgebrachte Beschichtung ausgebildet. Auch kann das Frontende aus einem vom Klemmbereich abweichenden Material gebildet sein.

Wenn das Frontende unabhängig vom Klemmbereich des Elektrodenhalters ausgebildet und mit diesem verbunden ist, kann das Frontende unabhängig vom Klemmbereich hergestellt und nachträglich mit diesem verbunden werden.

Besonders vorteilhaft ist es auch, wenn das Frontende lösbar mit dem Klemmbereich des Elektrodenhalters verbunden ist, so dass das Frontende insbesondere in Abhängigkeit von dem gewählten Schweißverfahren austauschbar ist.

In besonders vorteilhaften Ausführungsformen des Elektrodenhalters ist das Frontende aus einem keramischen Material oder einem Kohlstoffmaterial, insbesondere Graphit, gebildet.

Der erfindungsgemäße Schweißbrenner weist die Merkmale des Anspruchs 10 auf.

Bei einer besonders vorteilhaften Ausführungsform des Schweißbrenners ist zwischen einer an der Elektrodenhalteraufnahme des Schweißbrenners angeordneten Schutzgasdüse und dem Frontende des Elektrodenhalters ein Schutzgasringkanal zur Schutzgasführung ausgebildet, so dass neben dem vorteilhaften Effekt des Frontendes hinsichtlich der eingangs erörterten Vergrößerung der Kontaktbereiche zwischen den Klemmsegmenten des Klemmbereichs und der Elektrode sowie der abschirmenden Wirkung betreffend den Längsschlitz das Frontende auch die Ausbildung einer definierten Schutzgasführung ermöglicht.

Besonders vorteilhaft lässt sich der Schweißbrenner einsetzen, wenn der Schweißbrenner zur Durchführung eines WIG-Schweißverfahrens dient. Eine weitere vorteilhafte Möglichkeit zur Verwendung des Schweißbrenners ergibt sich, wenn dieser zur Durchführung eines Plasmaschweißverfahrens dient.

Nachfolgend wird eine bevorzugte Ausführungsform der Erfindung anhand der Zeichnungen näher erläutert.

Es zeigen:
- **Fig. 1:**: einen Schweißbrenner in isometrischer Darstellung;
- **Fig. 2:**: den in **Fig. 1** dargestellten Schweißbrenner in einer Teilschnittdarstellung mit einem in einer Elektrodenhalteraufnahme angeordneten Elektrodenhalter;
- **Fig. 3:**: den in **Fig. 2** dargestellten Elektrodenhalter in Seitenansicht;
- **Fig. 4:**: den in **Fig. 2** dargestellten Elektrodenhalter in isometrischer Darstellung;
- **Fig. 5:**: eine vergrößerte Teilschnittdarstellung des in **Fig. 2** dargestellten Schweißbrenners.

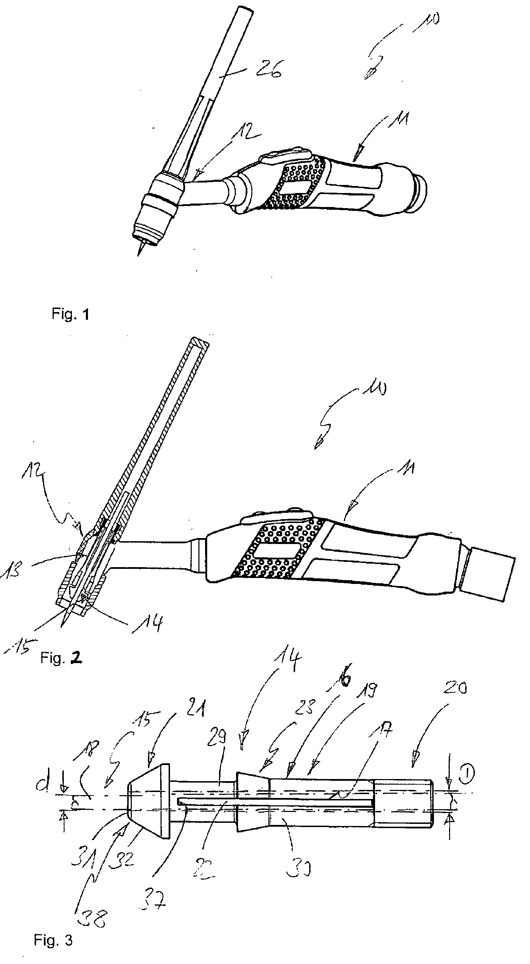

Die Fig. 1 und 2 zeigt einen Schweißbrenner 10 mit einem an einem Handgriff 11 angeordneten Brennerkopf 12, der in einer Elektrodenhalteraufnahme 13 einen Elektrodenhalter 14 aufweist, der, wie insbesondere Fig. 2 zeigt, zur Aufnahme einer Elektrode 15 dient.

Wie aus den Fig. 2, 3, 4 und 5 ersichtlich, weist der Elektrodenhalter 14 einen Aufnahmekörper 16 auf, der mit einer durchgehenden Längsbohrung 17 versehen ist, in der ein Längsabschnitt 18 der Elektrode 15 aufgenommen ist. Wie insbesondere Fig. 3 zeigt, in die mit strichpunktiertem Linienverlauf der Längsabschnitt 18 der Elektrode 15 eingezeichnet ist, ist ein Bohrungsdurchmesser D der Längsbohrung 17 geringfügig größer ausgebildet als ein Durchmesser d der Elektrode 15. Der Aufnahmekörper 16 weist in einem Klemmbereich 19, der zwischen einem Befestigungsbereich 20 und einem Frontende 21 ausgebildet ist, einen Längsschlitz 22 auf, so dass im Klemmbereich 19 zwei Klemmsegmente 29, 30 ausgebildet werden. Weiterhin ist der Aufnahmekörper 16 im Klemmbereich 19 mit einem Außenkonus 23 versehen, der sich vorzugsweise in einem mittleren Bereich des Längsschlitzes 22 befindet.

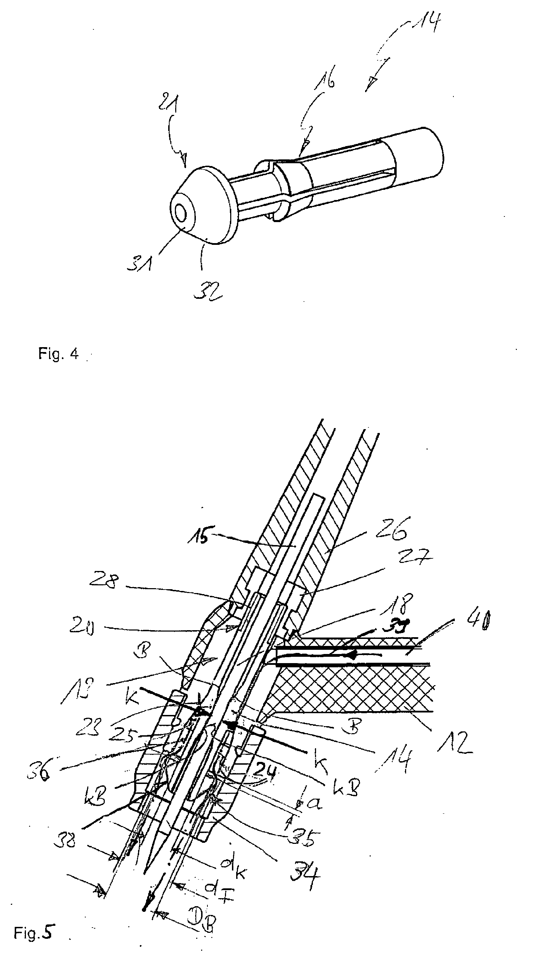

Fig. 5 zeigt den in der Elektrodenhalteraufnahme 13 des Schweißbrenners 10 aufgenommenen Elektrodenhalter 14 mit der im Elektrodenhalter 14 aufgenommenen Elektrode 15. Zur fixierten Aufnahme der Elektrode 15 im Elektrodenhalter 14 wird die in den Elektrodenhalter 14 mit dem Längsabschnitt 18 eingesetzte Elektrode 15 zusammen mit dem Elektrodenhalter 14 in eine Aufnahmebohrung 24 der im Brennerkopf 12 angeordneten Elektrodenhalteraufnahme 13 eingeführt, bis sich die Elektrodenaufnahme 14 mit dem Außenkonus 23 an einem in der Aufnahmebohrung 24 ausgebildeten Innenkonus 25 abstützt.

Anschließend wird eine als Brennerkappe 26 ausgeführte Spannvorrichtung, welche sich mit einem axialen Ende am Brennerkopf 12 abstützt, mit einer am axialen Ende angeordneten Spannmutter 27 auf einen im Befestigungsbereich 20 des Aufnahmekörpers 16 ausgebildeten Gewindezapfen 28 aufgeschraubt, derart, dass der Außenkonus 23 des Aufnahmekörpers 16 des Elektrodenhalters 14 in den Innenkonus 25 eingezogen wird und eine axiale Verspannung des Innenkonus 25 mit dem Außenkonus 23 im Klemmbereich 19 des Aufnahmekörpers 16 eine in Fig. 5 angedeutete radiale Klemmkraftverteilung K bewirkt. Infolge der als radiale Umfangslast wirkenden Klemmkraftverteilung K erfolgt eine ebenfalls in Fig. 5 angedeutete Biegung der durch den Längsschlitz 22 definierten Klemmsegmente 29, 30 mit Ausbildung von Kontaktbereichen KB, in denen die Klemmsegmente 29, 30 gegen die Elektrode 15 anliegen und diese in dem Elektrodenhalter 14 fixieren.

Aufgrund der Tatsache, dass der Längsschlitz 22 beidseitig axial begrenzt ist, nämlich zum einen durch den Verbindungsbereich 20 des Aufnahmekörpers 16 und zum anderen durch das Frontende 21 des Aufnahmekörpers 16, weisen die Klemmsegmente 29, 30 ein Biegeverhalten auf, das dem Biegefall eines beidseitig eingespannten Balkens entspricht. Hieraus resultieren die in Fig. 5 schematisch angedeuteten Biegelinien B der Klemmsegmente 29, 30, die im Bereich des Außenkonus 23 eine nur geringe Steigung aufweisen, so dass sich die Klemmsegmente 29, 30 in den Klemmbereichen KB flächig an die Oberfläche der Elektrode 15 anschmiegen.

Wie die Fig. 3 und 4 zeigen, ist das Frontende 21 im Wesentlichen kegelförmig ausgebildet mit einer Frontfläche 38, die eine ringförmige Stirnfläche 31 aufweist, an die sich eine zum Klemmbereich 19 hin konisch erweiternde Mantelfläche 32 anschließt. Wie insbesondere aus Fig. 5 zu ersehen ist, ist ein Außendurchmesser d_{F} der Frontfläche 38 des Frontendes 21 in einem Übergangsbereich 33 zum Klemmbereich 19 größer ausgebildet als der Außendurchmesser d_{K} des Klemmbereichs 19. Darüber hinaus ist bei dem dargestellten Ausführungsbeispiel der Außendurchmesser d_{F} des Frontendes 21 ebenfalls größer ausgebildet als der Bohrungsdurchmesser D_{B} der Aufnahmebohrung 24 der Elektrodenhalteraufnahme 13.

Darüber hinaus ist zwischen dem Frontende 21 und der Elektrodenhalteraufnahme 13 ein Abstand a ausgebildet. In Kombination mit einer auf die Elektrodenhalteraufnahme 13 aufgesetzten, im Wesentlichen wie eine zylindrische Hülse ausgebildeten Schutzgasdüse 34 ergibt sich somit die Ausbildung eines Schutzgasringkanals 35, der zur Ausbildung einer Schutzgasströmung 39 über eine im Brennerkopf 12 ausgebildete Schutzgaszuführung 39 mit Schutzgas versorgt wird. Durch das Frontende 21 ist eine abschirmende Überdeckung der Aufnahmebohrung 24 der Elektrodenhalteraufnahme 13 ausgebildet. Damit ist sichergestellt, dass Schweißspritzer oder dergleichen nicht in einen zwischen dem Klemmbereich 19 des Aufnahmekörpers 16 und der Aufnahmebohrung 24 der Elektrodenhalteraufnahme 13 ausgebildeten Ringkanalabschnitt 36 gelangen können. Ferner ist auch sichergestellt, dass durch das Frontende 21, das benachbart einem Längsschlitzende 37 (Fig. 3) des Längsschlitzes 22 angeordnet ist, der Längsschlitz 22 axial abgeschlossen ist, sodass auch keine Schweißspritzer oder dergleichen in den Längsschlitz 22 bzw. zwischen die Klemmsegmente 29, 30 gelangen können.

## Patentansprüche

1. Elektrodenhalter (14) für einen Schweißbrenner mit nicht abschmelzender Elektrode mit einem mit einer Längsbohrung (17) zur Aufnahme eines Längsabschnitts (18) einer Elektrode (15) versehenen Aufnahmekörper (16), wobei der Aufnahmekörper in einem Klemmbereich (19) mit einem Längsschlitz (22) zur Ausbildung von Klemmsegmenten (29, 30) versehen ist und in einem an den Klemmbereich anschließenden Befestigungsbereich (20) eine Verbindungseinrichtung zur Verbindung mit einer an einem Brennerkopf (12) des Schweißbrenners angeordneten Spanneinrichtung aufweist, wobei der Klemmbereich einen Außenkonus (23) aufweist, der bei Anordnung des Elektrodenhalters in einer im Brennerkopf aufgenommenen Elektrodenhalteraufnahme (13) derart mit einem Innenkonus (25) der Elektrodenhalteraufnahme zusammenwirkt, dass bei Herstellung einer Verbindung zwischen der Verbindungseinrichtung des Elektrodenhalters (14) und der Spanneinrichtung durch axiale Verspannung des Innenkonus (25) mit dem Außenkonus im Klemmbereich des Aufnahmekörpers eine radiale Klemmkraft auf die Elektrode wirkt, wobei sich der im Aufnahmekörper ausgebildete Längsschlitz (22) über den Außenkonus hinaus bis zu einem Frontende (21) des Aufnahmekörpers (16) erstreckt,
**dadurch gekennzeichnet,**
**dass** das Frontende (21) eine vordere axiale Begrenzung des Längsschlitzes (16) im Aufnahmekörper (14) ausbildet, derart, dass ein axiales Ende des Längsschlitzes (16) von einem axialen Ende des Aufnahmekörpers (14) durch das Frontende (21) beabstandet ist.

2. Elektrodenhalter nach Anspruch 1,
**dadurch gekennzeichnet,**
**dass** das Frontende (21) eine die Längsbohrung (17) einrahmende Frontfläche (38) aufweist, deren Außendurchmesser größer ist als ein Außendurchmesser des Klemmbereichs.

3. Elektrodenhalter nach Anspruch 1 oder 2,
**dadurch gekennzeichnet,**
**dass** das Frontende (21) kegelförmig ausgebildet ist mit einem sich von einem Öffnungsrand der Längsbohrung (17) zum Klemmbereich (19) hin vergrößernden Außendurchmesser.

4. Elektrodenhalter nach Anspruch 2 oder 3,
**dadurch gekennzeichnet,**
**dass** die Frontfläche (38) ein vom Klemmbereich des Elektrodenhalters abweichendes Material aufweist.

5. Elektrodenhalter nach Anspruch 4,
**dadurch gekennzeichnet,**
**dass** die Frontfläche (38) des Elektrodenhalters eine auf das Frontende (21) aufgebrachte Beschichtung aufweist.

6. Elektrodenhalter nach einem der vorangehenden Ansprüche,
**dadurch gekennzeichnet,**
**dass** das Frontende (21) aus einem vom Klemmbereich (19) abweichenden Material gebildet ist.

7. Elektrodenhalter nach einem der vorangehenden Ansprüche,
**dadurch gekennzeichnet,**
**dass** das Frontende (21) unabhängig vom Klemmbereich (19) des Elektrodenhalters (14) ausgebildet und mit diesem verbunden ist.

8. Elektrodenhalter nach Anspruch 7,
**dadurch gekennzeichnet,**
**dass** das Frontende (21) lösbar mit dem Klemmbereich (19) des Elektrodenhalters (14) verbunden ist.

9. Elektrodenhalter nach einem der vorangehenden Ansprüche,
**dadurch gekennzeichnet,**
**dass** das Frontende (21) aus einem keramischen Material oder einem Kohlenstoffmaterial, insbesondere Graphit, gebildet ist.

10. Schweißbrenner (10) mit nicht abschmelzender Elektrode mit einem in einer Elektrodenhalteraufnahme des Schweißbrenners angeordneten Elektrodenhalter nach einem der Ansprüche 1 bis 9.

11. Schweißbrenner (10) nach Anspruch 10,
**dadurch gekennzeichnet,**
**dass** zwischen einer an der Elektrodenhalteraufnahme (13) des Schweißbrenners angeordneten Schutzgasdüse (34) und dem Frontende (21) des Elektrodenhalters (14) ein Schutzgasringkanal (35) zur Schutzgasführung ausgebildet ist.

12. Schweißbrenner nach Anspruch 10 oder 11,
**dadurch gekennzeichnet,**
**dass** der Schweißbrenner zur Durchführung eines WIG-Schweißverfahrens dient.

13. Schweißbrenner nach Anspruch 10 oder 11,
**dadurch gekennzeichnet,**
**dass** der Schweißbrenner zur Durchführung eines Plasma-Schweißverfahrens dient.

## Claims

1. The electrode holder (14) for a welding torch having a non-fusing electrode consisting of a receiving body (16) provided with a longitudinal borehole (17) for the inclusion of a longitudinal section (18) of an electrode (15), wherein the receiving body is provided in a clamping area (19) with a longitudinal slit (22) for forming clamping segments (29, 30) and features a connecting device in a mounting area (20) bordering on the clamping area for connecting a tensioning device arranged on a burner head (12) of the welding torch, wherein the clamping area has an outer cone (23) which, when the electrode holder is arranged in an electrode holder receiver (13), which is received within a burner head, interacts with an inner cone (25) of the electrode holder receiver in such a way that when a connection is produced between the connection device of the electrode holder (14) and the tensioning device by axially clamping tension of the inner cone (25) with the outer cone in the clamping area of the receiving body, a radial clamping force acts on the electrode, wherein the longitudinal slit (22) formed in the receiving body (16) spans over the outer cone to the front end (21) of the receiving body
**characterized in that**
the front end (21) forms a frontal axial border of the longitudinal slit (16) in the receiving body (14) in such a way that the axial end of the longitudinal slit (16) is distanced from an axial end of the receiving body (14) by the front end (21).

2. An electrode holder according to Claim 1,
**characterized in that**
the front end (21) features a front surface (38) which frames the longitudinal borehole (17) and whose outer diameter is larger than an outer diameter of the clamping area.

3. An electrode holder according to Claim 1 or 2,
**characterized in that**
the front end (21) is cone-shaped with the outer diameter becoming larger starting at an opening edge of the longitudinal borehole (17) towards the clamping area (19).

4. An electrode holder according to Claim 2 or 3,
**characterized in that**
the front surface (38) consists of a material different from the material of the clamping area of the electrode holder.

5. An electrode holder according to Claim 4,
**characterized in that**
the front surface (38) of the electrode holder features a coating applied to the front end (21).

6. An electrode holder according to any one of the preceding Claims,
**characterized in that**
the front end (21) consists of a material different from the material of the clamping area (19).

7. An electrode holder according to any one of the preceding Claims,
**characterized in that**
the front end (21) is formed independently from and connected to the clamping area (19) of the electrode holder.

8. An electrode holder according to Claim 7,
**characterized in that**
the front end (21) is detachably connected with the clamping area (19) of the electrode holder (14).

9. An electrode holder according to any one of the preceding Claims,
**characterized in that**
the front end (21) is formed out of a ceramic material or a carbon material, graphite in particular.

10. A welding torch (10) having a non-fusing electrode comprising an electrode holder arranged in an electrode holder receiver of the welding torch according to any one of the Claims 1 through 9.

11. A welding torch (10) according to Claim 10,
**characterized in that**
an inert gas ring channel (35) for guiding inert gas is formed between an inert gas nozzle (34) arranged on the electrode holder receiver (13) of the welding torch and the front end (21) of the electrode holder (14).

12. A welding torch according to Claim 10 or 11,
**characterized in that**
the welding torch is used for the execution of TIG welding.

13. A welding torch according to Claim 10 or 11,
**characterized in that**
the welding torch is used for the execution of plasma welding.

## Revendications

1. Porte-électrode (14) pour une torche de soudage ayant une électrode non-fusionnée comprenant une entité recevant (16) prévue avec un perçage longitudinal (17) pour recevoir une section longitudinal (18) d'une électrode (15), dans lequel l'entité recevant est prévue dans une partie de serrage (19) comprenant une fente longitudinal (22) pour former des segments de serrage (29, 30) et comprenant un dispositif de connexion dans une partie de serrage bordant sur une partie de montage (20) pour connecter un dispositif de tension fixé sur une tête de brûleur (12) de la torche de soudage, dans lequel la partie de serrage comprend un cône extérieur qui, quand le porte-électrode est arrangé dans un porte-électrode récepteur (13) qui est reçu dans une tête brûleur, interagit avec un cône intérieur (25) du porte-électrode récepteur (13) à une façon que quand une connexion est produite entre le dispositif de connexion du porte-électrode (14) et le dispositif de tension par une tension axiale du cône intérieur (25) avec le cône extérieur dans la partie de serrage de l'entité recevant, une force de serrage radiale agit sur l'électrode, dans lequel la fente longitudinal (22) formée dans l'entité recevant s'étend au-delà du cône extérieur à une extrémité frontale (21) de l'entité recevant,
**caractérisé en ce que**
l'extrémité frontale (21) forme une limitation de la fente longitudinal (16) dans l'entité recevant (14) à une façon qu'une extrémité axial de la fente longitudinal (16) est distancée d'une extrémité axial de l'entité recevant (14) par l'extrémité frontale (21).

2. Porte-électrode selon la revendication 1,
**caractérisé en ce que**
l'extrémité frontale (21) comprend une surface frontale (38) encadrant le perçage longitudinal (17) dont le diamètre extérieur est plus grand qu'un diamètre extérieur de la partie de serrage.

3. Porte-électrode selon les revendications 1 ou 2,
**caractérisé en ce que**
l'extrémité frontale (21) est formée conique avec un diamètre extérieur qui s'agrandit d'un bord d'ouverture du perçage longitudinal (17) à la partie de serrage (19).

4. Porte-électrode selon les revendication 2 ou 3,
**caractérisé en ce que**
la surface frontale (38) comprend un matériau différé du matériau de la partie de serrage.

5. Porte-électrode selon la revendication 4,
**caractérisé en ce que**
la surface frontale (38) du porte-électrode comprend une couche appliquée sur l'extrémité frontale (21)

6. Porte-électrode selon l'une quelconque des revendications précédentes,
**caractérisé en ce que**
l'extrémité frontale (21) est formée d'un matériau différé de la partie de serrage (19).

7. Porte-électrode selon l'une quelconque des revendications précédentes,
**caractérisé en ce que**
l'extrémité frontale (21) est formée indépendamment de et connectée avec la partie (19) du porte-électrode (14).

8. Porte-électrode selon la revendication 7,
**caractérisé en ce que**
l'extrémité frontale (21) est connectée détachable avec la partie de serrage (19) du porte-électrode (14).

9. Porte-électrode selon l'une quelconque des revendications précédentes,
**caractérisé en ce que**
l'extrémité frontale (21) est formée d'un matériau céramique ou une matière carbonée, particulièrement graphite.

10. Torche de soudage (10) ayant une électrode non-fusionnée comprenant un porte-électrode arrangé dans un porte-électrode récepteur de la torche de soudage selon les revendications 1 à 9.

11. Torche de soudage (10) selon la revendication 10
**caractérisée en ce que**
une canal circulaire de gaz inerte pour le guidage de gaz inerte est formée entre un injecteur de gaz inerte (34) arrangé sur le porte-électrode récepteur (13) de la torche de soudage et l'extrémité frontale (21) du porte-électrode.

12. Torche de soudage selon les revendications 10 ou 11,
**caractérisée en ce que**
la torche de soudage sert à la réalisation de soudage TIG.

13. Torche de soudage selon les revendications 10 ou 11,
**caractérisée en ce que**
la torche de soudage sert à la réalisation de soudage plasma.
